# EUROPEAN PATENT SPECIFICATION

(11) **EP 4 382 280 B1**
(45) Date of publication and mention of the grant of the patent: **07.05.2025**
(21) Application number: 22865096.6
(22) Date of filing: 02.09.2022
(51) Int. Cl.: B29C 51/08, B29C 51/10, B29C 43/36, B29C 43/04, B29C 51/26, B29C 51/36, H01M 50/10

(54) **POUCH MANUFACTURING APPARATUS**
BEUTELHERSTELLUNGSVORRICHTUNG
APPAREIL DE FABRICATION DE POCHE

(30) Priority: 02.09.2021 KR 20210117120
(43) Date of publication of application: 12.06.2024
(73) Proprietor: LG ENERGY SOLUTION, LTD., Seoul 07335 (KR)
(72) Inventor: KIM, Ik Joon, Daejeon 34122 (KR)
(74) Representative: Plasseraud IP
(86) International application number: PCT/KR2022/013208
(87) International publication number: WO 2023/033594

(56) References cited:
- CN-A- 106 140 947
- CN-A- 109 176 723
- CN-A- 109 332 495
- CN-A- 109 332 495
- CN-U- 204 620 866
- JP-B2- 5 101 906
- KR-A- 20140 019 933
- KR-A- 20140 019 933
- KR-A- 20200 052 061
- US-A1- 2005 127 566
- US-A1- 2014 234 469
- US-A1- 2020 083 493
- US-A1- 2020 282 627
- US-A1- 2020 406 528

## Description

### TECHNICAL FIELD

### CROSS-REFERENCE TO RELATED APPLICATION

The present application claims the benefit of the priority of Korean Patent Application 10-2021-0117120, filed on September 02, 2021.

### TECHNICAL FIELD

The present invention relates to an apparatus for manufacturing a pouch.

### BACKGROUND ART

In general, secondary batteries are chargeable and dischargeable unlike primary batteries that are not chargeable and are widely used in electronic devices such as mobile phones, notebook computers, camcorders, and the like, electric vehicles, or the like. Particularly, since a lithium secondary battery has larger capacity than a nickel-cadmium battery or a nickel-hydrogen battery and has a high energy density per unit weight, a degree of its utilization is rapidly increasing.

A secondary battery is classified according to an electrode assembly having a positive electrode/separator/negative electrode structure. Representatively, exemplary examples of the electrode assembly may include a jelly-roll type (winding type) electrode assembly in which long sheet-shaped electrodes are wound with a separator therebetween, a stack-type electrode assembly in which a plurality of electrodes, which are cut into units, each of which has a predetermined size, are sequentially stacked with a separator therebetween, a stack-folding type electrode assembly in which bi-cells or full cells, which are stacked with a separator therebetween, are wound, and the like.

In addition, such a secondary battery may be classified into a cylindrical battery or a prismatic battery in which an electrode assembly is built in a cylindrical or prismatic metal can and a pouch type battery in which an electrode assembly is built in a pouch type case provided as an aluminum lamination sheet.

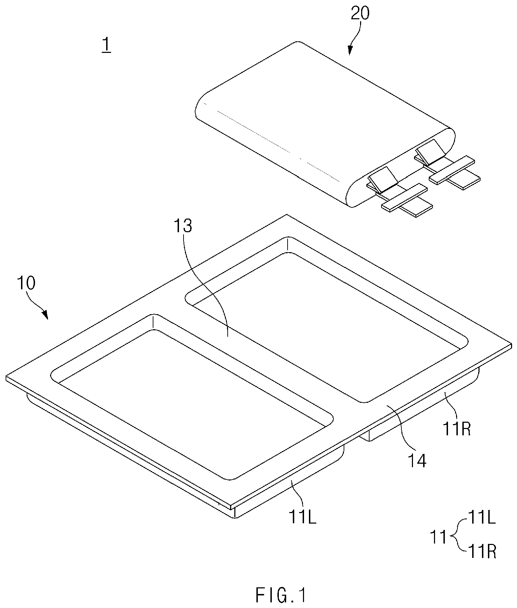

FIG. 1 illustrates an example of a pouch-type secondary battery. A pouch-type secondary battery 1 includes an electrode assembly 20, in which electrodes and separators are alternately stacked, and a pouch 10, into which the electrode assembly is inserted. In addition, the pouch includes a cup part 11 of the pouch, which has a recessed shape so that the electrode assembly is directly accommodated. The cup part of the pouch may be provided with a cup part 11L of a left pouch and a cup part 11R of a right pouch to surround the electrode assembly at both sides. A peripheral part 14 of the pouch is formed around the periphery of each of the cup parts of the pouch to seal the pouch from the outside.

The cup part of the pouch is usually molded by pressing a pouch film by using a punch. However, an impact may be applied to the punch or the like during such a pressing process. Such an impact may adversely affect the outer appearance of the pouch or the lifespan of the apparatus for manufacturing the pouch, and thus, it is preferable to effectively buffer the cup part.

Document US 2020/083493 A1 related to a pouch-type secondary battery having an increased energy density by reducing a dead space and an apparatus for forming a pouch film that is used for the pouch-type secondary battery.

Document US 2020/282627 discusses a pouch molding method and apparatus, in which, when a cup part of a pouch is formed, elongation of a pouch film is uniformly maintained to prevent wrinkles from occurring in the cup part.

Document JP 5 101906 B2 discusses a semiconductor device manufacturing apparatus and manufacturing method including a mold die and a lead frame suitable for improving production efficiency and product quality in 1%.

Document KR 2020 0052061 A discusses a pouch forming apparatus and method capable of preventing the occurrence of wrinkles or cracks in the cup portion by improving the stretching quality of the pouch film when forming the cup portion of the pouch.

Document US 2020/406528 A1 discusses a pouch forming apparatus and method, in which a non-sealing part formed when a pouch film, in which two cup parts are formed, is bent is reduced in area.

Document KR 2014 0019933 A discusses a battery sheet manufacturing apparatus capable of preventing the defective product caused by wrinkles or the like formed on the outer surface of the battery case in the process of manufacturing the battery case of the built-in secondary battery.

Document US 2014/234469 A1 relates to a device for shaping deep-drawn containers.

Document CN 109 332 495 A relates to the technical field of presses, in particular to a press with high processing precision.

Document US 2005/127566 A1 relates to complex sheeting of composite material, more exactly to the production of shaped structures or pieces with relatively thin wall elements, arranged in several planes to make.

### DISCLOSURE OF THE INVENTION

### TECHNICAL PROBLEM

An object of the prevent invention is to provide an apparatus for manufacturing a pouch, which is capable of effectively alleviating an impact applied to a punch while pressing a pouch film by the punch or an impact applied to a member that is in direct or indirect contact with the pouch.

Another object of the present invention is to provide an apparatus for manufacturing a pouch, which is capable of better molding an outer appearance of the pouch.

Another object of the present invention is to provide an apparatus for manufacturing a pouch, which is capable of more angularly molding a cup part and more uniformly molding a depth of the cup part.

### TECHNICAL SOLUTION

The present invention is defined by the features of claim 1. In an embodiment, an apparatus for manufacturing a pouch includes a lower die provided with a forming groove for forming a cup part in a pouch film, an upper die disposed to be spaced upward from the lower die, and a punch supported by the upper die and configured to move toward the forming groove so as to press the pouch film to be disposed on the lower die, wherein the punch includes: an upper punch vertically movably connected to the upper die; a lower punch disposed to be spaced downward from the upper punch and configured to move together with the upper punch to press the pouch film; and an elastic part disposed between the upper punch and the lower punch to elastically support the lower punch.

In another embodiment, the elastic part may be provided to elastically press the lower punch downward.

The elastic part includes a connection bar fixed to one of the upper punch and the lower punch and connected to the other one of the upper punch and the lower punch so as to be movable in a vertical direction with respect to the other one, and an elastic member provided to surround the connection bar between the upper punch and the lower punch.

In further another embodiment, the upper punch may include an upper punch body configured to define an outer appearance of the upper punch, a first through-hole configured to pass through the upper punch body from a top surface of the upper punch body to one point between the top surface and a bottom surface of the upper punch body, and a second through-hole having an inner diameter greater than that of the first through-hole and configured to pass through the upper punch body from the one point to the bottom surface of the upper punch body, wherein the second through-hole communicates with the first through-hole.

In further another embodiment, the connection bar may include a head disposed outside the top surface of the upper punch body, and a fixed bar extending downward from the head to pass through the first and second through-holes so as to be fixed to the lower punch at a lower end thereof.

In further another embodiment, the head may have a diameter greater than that of the first through-hole so as not to be inserted into the first through-hole or have a diameter greater than that of a central hole of a washer disposed between the head and the top surface of the upper punch body.

In further another embodiment, an upper end of the elastic member may be inserted into the second through-hole so as to be seated on a jaw provided by a difference in inner diameter between the first through-hole and the second through-hole.

In further another embodiment, the upper punch may include an upper punch body configured to define an outer appearance of the upper punch, and a through-groove configured to pass through the upper punch body from one point between a top surface and a bottom surface of the upper punch body to the bottom surface of the upper punch body, and the connection bar may include a head disposed inside the through-groove, and a fixed bar having a diameter less than that of the head and extending downward from the head so as to be fixed to the lower punch at a lower end thereof, wherein an upper end of the elastic member may be inserted into the through-groove so as to be disposed below the head.

In further another embodiment, the elastic part may include a body portion inserted into the through-groove of the upper punch and having an inverted U-shaped cross-section, and an extension portion horizontally extending outward from a lower end of the body portion so as to be in close contact with the bottom surface of the upper punch body, wherein the connection bar and the elastic member may be inserted into an inner space of the body portion inserted into the through-groove.

In further another embodiment, the elastic part may include an outer elastic member disposed adjacent to an outer edge of the lower punch, and an inner elastic member disposed closer to a center of the lower punch than the outer elastic member.

In further another embodiment, the outer elastic member may have an elastic modulus less than that of the inner elastic member.

In further another embodiment, the lower die may include a lower die body which is configured to define an outer appearance of the lower die and in which the forming groove is defined, and a nest disposed to be vertically movable inside the forming groove and provided to support the punch moving into the forming groove.

In further another embodiment, the punch may be configured to move downward until the pouch film is in close contact with a top surface of the nest.

### ADVANTAGEOUS EFFECTS

According to the present invention, since the punch pressing the pouch film includes the upper and lower punches, which are spaced apart from each other, and the elastic part disposed between the upper punch and the lower punch, the impact applied to the punch while being pressed by the punch or the impact applied to the member that is in direct or indirect contact with the punch may be effectively alleviated.

In addition, according to the present invention, even though the nest is applied to the apparatus for manufacturing the pouch, the elastic member for the buffering is provided in the punch, but not the nest, the outer appearance of the pouch may be more better molded compared to the case in which the elastic member is provided in the nest.

Furthermore, according to the present invention, the vacuum elongation process may be applied to the apparatus for manufacturing the pouch, and when the vacuum elongation process is applied, the cup part of the pouch may be more angularly molded due to the vacuum operation and the pressing of the punch, and the depth of the cup part may be more uniformly molded.

### BRIEF DESCRIPTION OF THE DRAWINGS

FIG. 1 is an exploded perspective view illustrating a pouch of a secondary battery and an electrode assembly embedded in the pouch.
FIG. 2 is a cross-sectional view illustrating an apparatus for manufacturing a pouch according to Embodiment 1 of the present invention.
FIG. 3 is a cross-sectional view illustrating a punch applied to the apparatus for manufacturing the pouch of FIG. 2.
FIGS. 4 to 8 are views for explaining a process of molding a pouch film using the apparatus for manufacturing the pouch of FIG. 2.
FIG. 9 is a cross-sectional view illustrating an apparatus for manufacturing a pouch according to Embodiment 2 of the present invention.
FIG. 10 is a cross-sectional view illustrating a punch applied to the apparatus for manufacturing the pouch of FIG. 9.
FIG. 11 is a rear view illustrating a state after a lower punch of the punch of FIG. 10 is removed.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

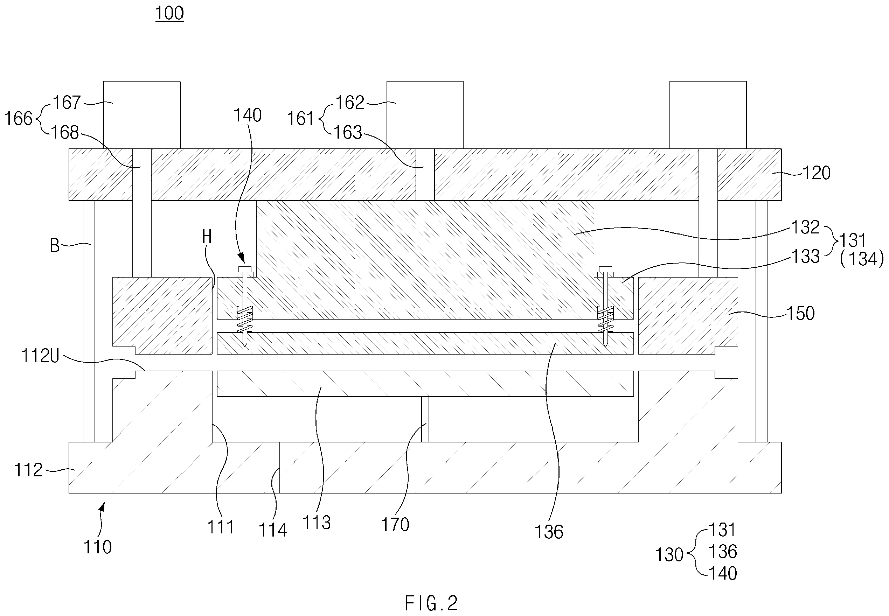

FIG. 2 is a cross-sectional view illustrating an apparatus for manufacturing a pouch according to Embodiment 1 of the present invention. As illustrated in FIG. 2, an apparatus 100 for manufacturing a pouch according to Embodiment 1 of the present invention includes a lower die 110, an upper die 120, and a punch 130.

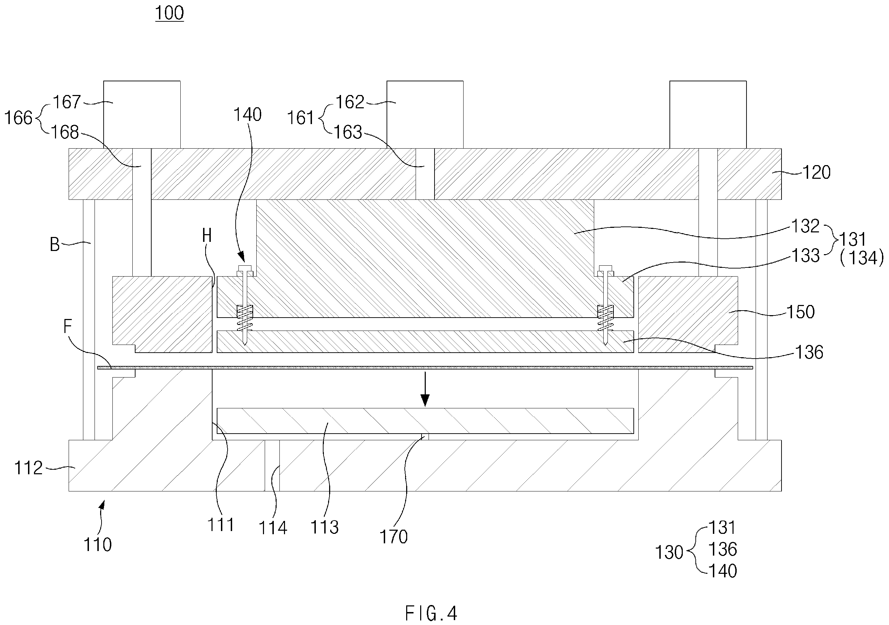

The lower die 110 may be a die in which a forming groove 111 for forming a cup part 11 (see FIG. 1) is defined. The forming groove 111 may be a groove or hole defined by be recessed downward from a top surface 112U of a lower die body 112 that defines an outer appearance of the lower die 110. A pouch film F (see FIG. 4) disposed on the top surface 112U of the lower die body 112 may be pressed to a lower side of the forming groove 111 by the punch 130 to be described later to form the cup part 11.

The upper die 120 may be a die disposed to be spaced upward from the lower die 110. A connection pillar B may be provided between the upper die 120 and the lower die 110 to maintain a separation distance therebetween. Cylinders 161 and 166 for vertical movement of the punch 130 or vertical movement of a stripper 150 to be described later may be disposed on the upper die 120.

The punch 130 may be a block for pressing the pouch film F disposed on the lower die 110. The punch 130 may be supported by the upper die 120. The punch 130 may be provided to move toward the forming groove 111. For example, the punch 130 may be connected to a punch cylinder 161 fixed to the upper die 120 so as to be indirectly fixed to the upper die 120 and may vertically move with respect to the upper die 120 according to the operation of the punch cylinder 161. The punch cylinder 161 may include a cylinder body 162 and a cylinder rod 163 that is reciprocated according to a hydraulic pressure supplied to the inside of the cylinder body 162. The punch 130 may be connected to the cylinder rod 163.

The punch 130 may include an upper punch 131. The upper punch 131 may be a block vertically movably connected to the upper die 120. The cylinder rod 163 of the punch cylinder 161 may be coupled to the upper punch 131. The upper punch 131 may include an upper block 132 disposed at an upper side, and a lower block 133 disposed at a lower side and provided wider in a left and right direction than the upper block 132 in FIG. 2. The upper punch 131 may have an inverted T-shaped cross-section.

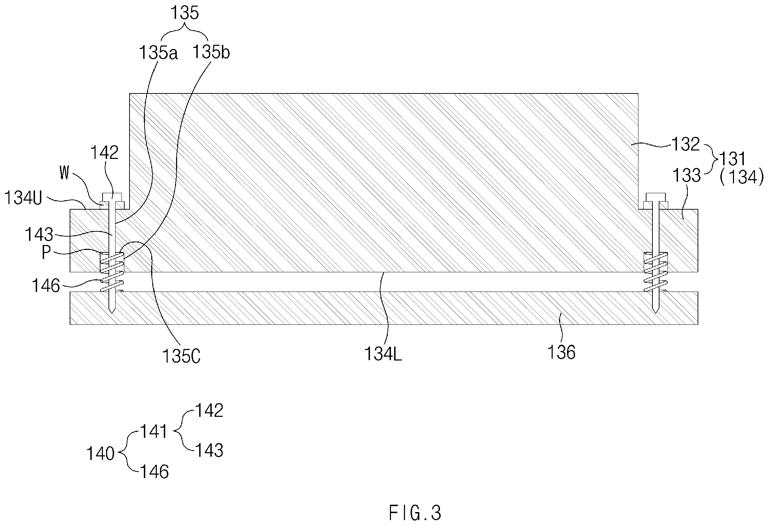

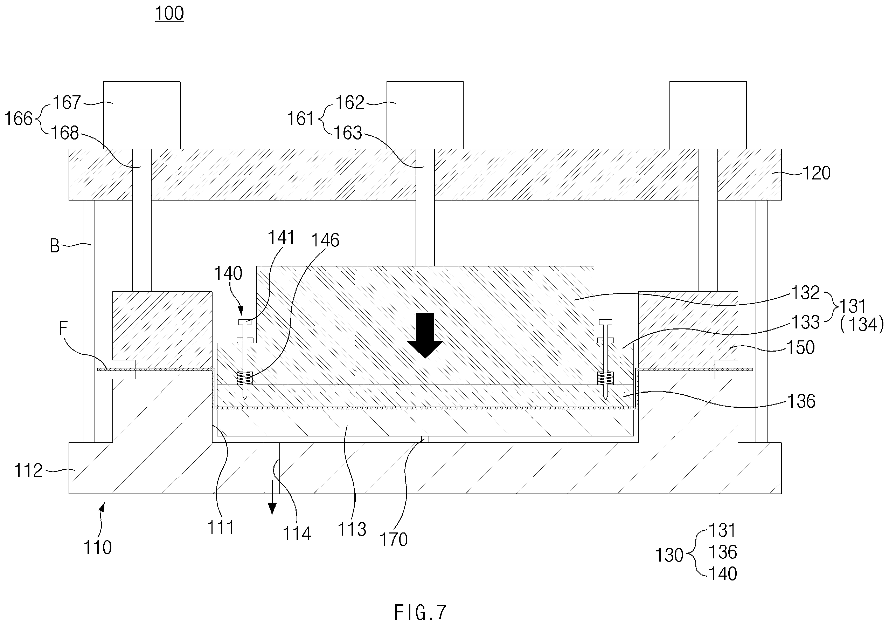

The punch 130 may include a lower punch 136. The lower punch 136 may be a block disposed to be spaced downward from the upper punch 131. The lower punch 136 may move together with the upper punch 131 according to the movement of the upper punch 131. During such movement, the lower punch 136 may be in contact with the pouch film F to press the pouch film F (see FIG. 7). The lower punch 136 is connected to the upper punch 131 by a predetermined bar and may move together with the upper punch 131 while being spaced apart from the upper punch 131. For example, the lower punch 136 may be connected to be spaced apart from the upper punch 131 by a fixed bar 143 (see FIG. 3) to be described later.

The punch 130 may include an elastic part 140 that elastically supports the lower punch 136 with respect to the upper punch 131. For example, when the lower punch 136 is pressed upward by a nest 113 or the like to be described later while the lower punch 136 presses the pouch film F, the elastic part 140 may alleviate an impact applied to the lower punch 136 while pressing the elastic member 146 (see FIG. 3) to be described (see FIG. 3).

The elastic part 140 may be provided to elastically press the lower punch 136 downward in a state of being supported by the upper punch 131 so as to buffer the lower punch 136. For example, the elastic member 146 of the elastic part 140 may be disposed between the upper punch 131 and the lower punch 136 in the pressed state. An amount of compression of the elastic member 146 may be determined according to a required degree of the buffering.

The elastic part 140 may be disposed between the upper punch 131 and the lower punch 136. For example, the whole or portion of the elastic part 140 may be disposed between the upper punch 131 and the lower punch 136. FIG. 2 illustrates a case in which a portion of the elastic part 140 is disposed between the upper punch 131 and the lower punch 136.

In the apparatus 100 for manufacturing the pouch according to Embodiment 1 of the present invention, since the punch 130 pressing the pouch film F includes the elastic part 140 disposed between the upper punch 131 and the lower punch 136, the impact applied to the punch 130 while being pressed by the punch 130 or the impact applied to member (e.g., the nest 113 to be described) that is in direct or indirect contact with the punch 130 may be effectively alleviated.

The elastic part 140 of this embodiment will be described in detail with reference to FIG. 3. FIG. 3 is a cross-sectional view illustrating the punch applied to the apparatus for manufacturing the pouch of FIG. 2. The elastic part 140 may include a connection bar 141 and an elastic member 146 as illustrated in FIG. 3.

The connection bar 141 may be a bar that is fixed to any one of the upper punch 131 and the lower punch 136 and is movably connected to the other one of the upper punch 131 and the lower punch 136 in a vertical direction with respect to the other one. FIG. 3 illustrates the connection bar 141 fixed to the lower punch 136 and movably connected to the upper punch 131.

When the upper punch 131 moves in the vertical direction in FIG. 3, the lower punch 136 connected to the upper punch 131 by the connection bar 141 may also move in the vertical direction together with the upper punch 131. FIG. 3, when the lower punch 136 moves upward by external force, only the connection bar 141 fixed to the lower punch 136 may move upward together with the lower punch 136 without moving the upper punch 131. Here, the elastic member 146 may be pressed, and during the pressing, the elastic member 146 may elastically support the lower punch 136. Thus, the impact applied to the lower punch 136 and the like may be alleviated.

The connection bar 141 may include a head 142 and a fixed bar 143 so as to be vertically movably connected to the upper punch 131 and fixed to the lower punch 136.

The upper punch 131 may include an upper punch body 134 (including an upper block 132 and a lower block 133) defining an outer shape of the upper punch 131, and the head 142 may be disposed outside a top surface 134U of the upper punch body 134. The head 142 may have a diameter greater than that of a through-hole 135 so as not to be inserted into the through-hole 135 (e.g., a first through-hole 135a to be described later). A washer W may be disposed between the head 142 and the top surface 134U of the upper punch body 134. In this case, the head 142 may have a diameter greater than that of a central hole of the washer W passing through the fixed bar 143 to be described later.

The upper punch 131 may include a through-hole 135 (e.g., a first through-hole 135a and a second through-hole 135b to be described later) passing through the upper punch body 134 from the top surface 134U to a bottom surface 134L of the upper punch body 134. Here, the fixing bar 143 may extend downward from the head 142 to pass through the through-hole 135. A lower end of the fixed bar 143, which is exposed to a lower side of the upper punch body 134, may be fixed to the lower punch 136. In FIG. 3, the lower end of the fixed bar 143 provided to be pointed is exemplified, and a screw thread for screw-coupling with the lower punch 136 may be disposed at the pointed lower end of the fixed bar 143.

The elastic member 146 is configured to provide elastic force of the elastic part 140 and may be, for example, a spring. The whole or a portion of the elastic member 146 may be disposed between the upper punch 131 and the lower punch 136. FIG. 3 illustrates an example in which a portion of the elastic member 146 is inserted into the second through-hole 135b to be described later, and a remaining portion of the elastic member 146 is disposed between the upper punch 131 and the lower punch 136. The elastic member 146 may be provided to surround the connection bar 141 as illustrated in FIG. 3. When the elastic member 146 is disposed to surround the connection bar 141, the elastic member 146 may more stably support the lower punch 136 during the relative movement of the lower punch 136 with respect to the upper punch 131. However, on the other hand, the elastic member may be disposed separately from the connection bar.

The elastic member 146 may be disposed to be seated in the second through-hole 135b of the first through-hole 135a and the second through-hole 135b defined in the upper punch body 134. The first through-hole 135a may be a hole passing through the upper punch body 134 from the top surface 134U of the upper punch body 134 to one point P between the top surface 134U and the bottom surface 134L of the upper punch body 134. The second through-hole 135b may have an inner diameter greater than that of the first through-hole 135a may a hole passing through the upper punch body 134 from the one point P to the bottom surface 134L of the upper punch body 134. The first through-hole 135a and the second through-hole 135b may communicate with each other. Since the first through-hole 135a and the second through-hole 135b have different inner diameters, a jaw 135c may be disposed on a boundary between the first through-hole 135a and the second through-hole 135b. An upper end of the elastic member 146 may be inserted into the second through-hole 135b and be seated on the jaw 135c between the first and second through-holes 135a and 135b. Thus, the elastic member 146 may be stably disposed between the upper punch 131 and the lower punch 136.

The apparatus 100 for manufacturing the pouch according to this embodiment may include a stripper 150 for pressing and fixing the pouch film F as illustrated in FIG. 2. The stripper 150 may be connected to a stripper cylinder 166 fixed to the upper die 120 so as to be indirectly fixed to the upper die 120 and may vertically move with respect to the upper die 120 according to an operation of the stripper cylinder 166. The stripper cylinder 166 may include a cylinder body 167 and a cylinder rod 168 that is reciprocated according to a hydraulic pressure supplied to the inside of the cylinder body 167. The stripper 150 may be connected to the cylinder rod 168. The punch 130 may move in the vertical direction by passing through the stripper 150 through a hole H defined in a central portion of the stripper 150.

The lower die 110 according to this embodiment may include the lower die body 112 and the nest 113 as illustrated in FIG. 2. The lower die body 112 may be a block defining an outer appearance of the lower die 110. A forming groove 111 may be defined in the lower die body 112 so as to be recessed inward. The nest 113 may be provided inside the forming groove 111 to support the punch 130 moving to the forming groove 111. In order to change the support position according to the degree to which the punch 130 is inserted into the forming groove 111, the punch 130 may be provided to move in the vertical direction inside the forming groove 111. For this, a nest cylinder 170 for vertical movement of the nest 113 may be disposed on the lower die 110.

Hereinafter, a process of molding the pouch film F by the apparatus 100 for manufacturing the pouch according to the present embodiment will be described with reference to FIGS. 4 to 8. FIGS. 4 to 8 are views for explaining a process of molding a pouch film using the apparatus for manufacturing the pouch of FIG. 2.

First, as illustrated in FIG. 4, a nest 113 moves downward. A moving distance of the nest 113 may be determined based on an insertion depth of a punch 130. FIG. 4 illustrates a case in which the nest 113 disposed adjacent to an upper opening of a forming groove 111 moves downward. When the nest 113 is disposed adjacent to a lower bottom surface of the forming groove 111, the nest 113 may move upward.

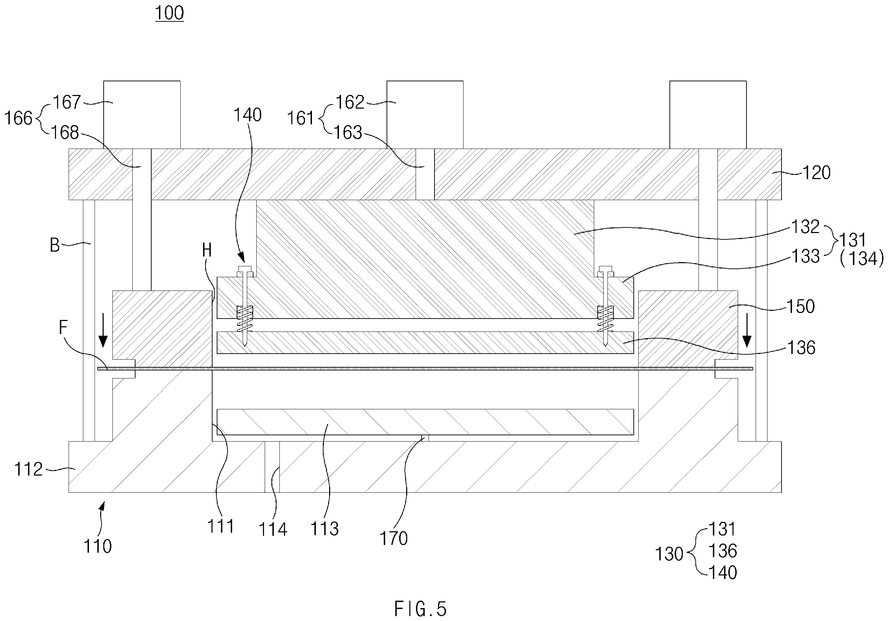

Next, as illustrated in FIG. 5, a stripper 150 descends by a stripper cylinder 166. The stripper 150 may press a pouch film F disposed on a top surface 112U of a lower die body 112 to fix the pouch film F during molding of the pouch film F.

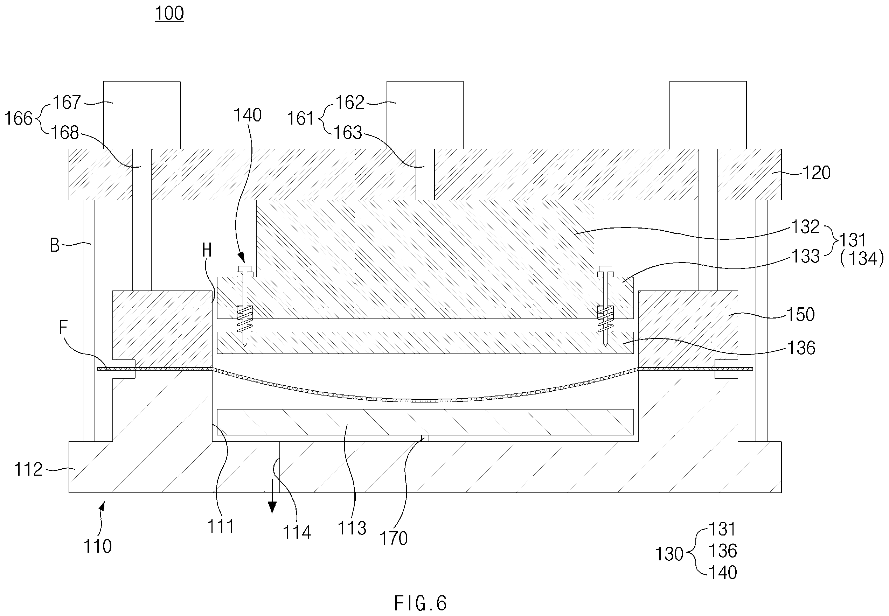

Next, as illustrated in FIG. 6, internal air of the forming groove 111 is discharged through a vacuum passage 114 formed in the lower die body 112. Thus, the pouch film F disposed on the top surface 112U of the lower die body 112 may be elongated downward. For such vacuum elongation, the vacuum passage 114 of the lower die body 112 may communicate with a vacuum pump (not shown).

The apparatus 100 for manufacturing the pouch according to this embodiment may be applied to a vacuum elongation process as described above. When the vacuum elongation process is applied, a cup part 11 of the pouch may be more angular, for example, an angle between a bottom surface and a side surface of the cup part 11 may be close to 90 degrees. The angled pouch may increase in volume of an electrode assembly accommodated in the same volume to improve energy density of the battery. In addition, when the vacuum elongation process is applied, in the manufactured pouch, a depth of the cup part 11 may be substantially constant.

It may be considered to disposed an elastic member under the nest 113 for buffering. However, if the elastic member is disposed under the nest 113, during the vacuum elongation or during movement of the nest 113, the pouch film F may be fitted between an inner wall of the lower die body 112, which defines the forming groove 111, and the nest 113 due to shaking of the nest 113. This is undesirable because the outer appearance of the pouch is poor. However, in the apparatus 100 for manufacturing the pouch according to this embodiment, since the elastic member 146 for buffering is not disposed on the nest 113, but disposed on the punch 130, the above problem does not occur.

Next, as illustrated in FIG. 7, the punch 130 descends by the punch cylinder 161. As a result, the pouch film F is pressed, and thus, the cup part 11 of the pouch may be formed to be more angular. Here, an impact occurring between the punch 130 and the nest 113 may be alleviated by the elastic part 140 of the punch 130. For example, when an impact is applied to the punch 130 by the nest 113, as illustrated in FIG. 7, the lower punch 136 may move toward the upper punch 131 in a state of being elastically supported by the elastic part 140, and in this process, the impact occurring between the punch 130 and the nest 113 may be alleviated. This may be beneficial to the good outer appearance of the pouch or the lifetime of the apparatus for manufacturing the pouch.

The punch 130 may be provided to move downward until the pouch film F is in close contact with a top surface of the nest 113. When moving as described above, the pouch film F may be pressed in a state in which a gap (except for a gap due to the film) is not formed between the punch 130 and the nest 113, and thus, the outer appearance of the pouch is better molded.

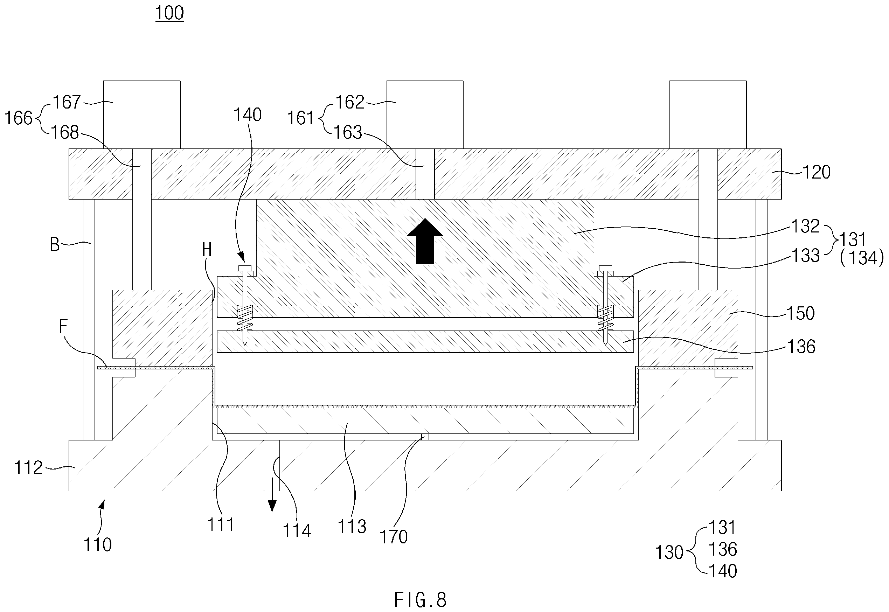

Finally, as illustrated in FIG. 8, the punch 130 ascends by the punch cylinder 161.

### Embodiment 2

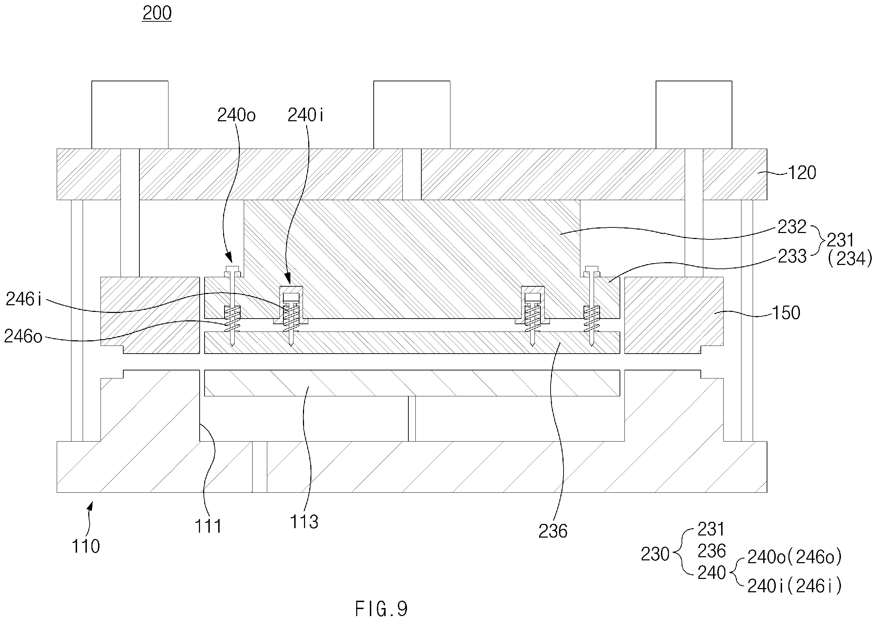

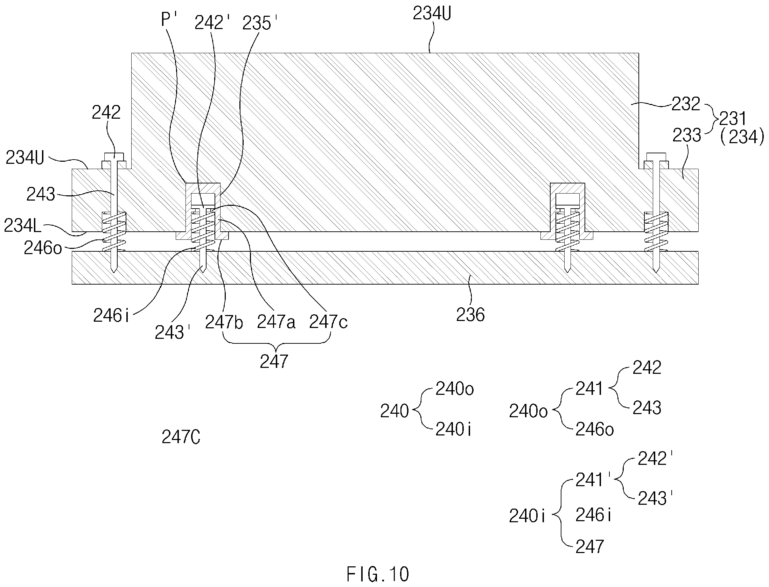

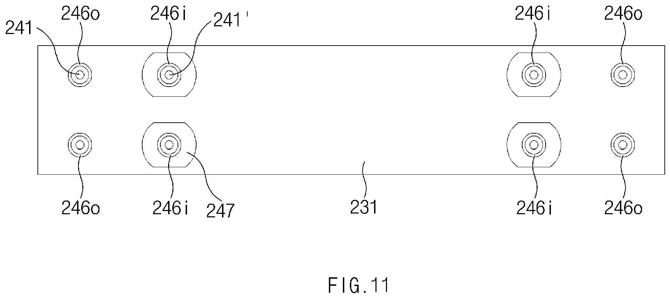

FIG. 9 is a cross-sectional view illustrating an apparatus for manufacturing a pouch according to Embodiment 2 of the present invention, FIG. 10 is a cross-sectional view illustrating a punch applied to the apparatus for manufacturing the pouch of FIG. 9, and FIG. 11 is a rear view illustrating a state after a lower punch of the punch of FIG. 10 is removed. A manufacturing apparatus according to Embodiment 2 is different from the manufacturing apparatus according to Embodiment 1 in a punch. Hereinafter, a punch 230 will be mainly described. For reference, the matters described in Embodiment 1 may be applied to Embodiment 2 in the same or similar manner.

As illustrated in FIG. 9, an apparatus 200 for manufacturing the pouch according to Embodiment 2 of the present invention includes a lower die 110, an upper die 120, and a punch 230. The lower die 110 may include a forming groove 111. The lower die 110 may include a nest 113 disposed in the forming groove 111. The punch 230 may include an upper punch 231 and a lower punch 236. The upper punch 231 may include an upper block 232 and a lower block 233.

The apparatus 200 for manufacturing the pouch according to this embodiment may include a stripper 150 for fixing a pouch film.

The punch 230 according to this embodiment may include an elastic part 240. The elastic part 240 according to this embodiment may include an outer elastic member 246o and an inner elastic member 246i as illustrated in FIGS. 9 and 11. The outer elastic member 246o may be an elastic member disposed adjacent to an outer edge of the lower punch 236 (e.g., four vertexes of the lower punch with reference to FIG. 11), and the inner elastic member 246i may be an elastic member disposed adjacent to a center of the lower punch 236 rather than the outer elastic member 246o. FIG. 11 illustrates an example in which four outer elastic members 246o and four inner elastic members 246i are provided. For reference, FIG. 11 is a rear view illustrating a state after removing the lower punch 236 of the punch 230, but the outer edge and the center of the lower punch 236 may substantially correspond to an outer edge and a center of the upper punch 231.

The punch 230 according to this embodiment may include elastic members 246o and 246i adjacent to the outer edge of the lower punch 236 or the upper punch 231 and adjacent to the center of the lower punch 236 or the upper punch 231, respectively. Therefore, the lower punch 236 may be more stably supported through the elastic members 246o and 246i. For reference, connection bars 241 and 241' (see FIG. 10) may also be disposed at the centers of the outer elastic member 246o and the inner elastic member 246i as in Embodiment 1.

In this embodiment, an elastic modulus of the outer elastic member 246o may be less than an elastic modulus of the inner elastic member 246i. In this case, the punch 230 may relatively strongly press a central portion on an area (e.g., an area corresponding to the forming groove) in which a cup part 11 will be formed in the pouch film F, and a peripheral portion may be relatively weakly pressed by the punch 230. This may assist to suppress an occurrence of a problem in the edge (a boundary between a bottom surface and a side surface) of the cup part 11 during molding the cup part 11. For reference, even if materials have the same elastic modulus, the above effect may be achieved by varying a degree of compression (e.g., by disposing the outer elastic member to be less pressed).

An elastic part 240o (hereinafter, referred to as an outer elastic part) disposed adjacent to an outer edge of the lower punch 236 and an elastic part 240i (hereinafter, referred to an inner elastic part) disposed closer to a center of the lower punch 236 than the outer elastic part may have different structures as illustrated in FIGS. 9 and 10.

The outer elastic part 240o may have the same structure as the elastic part 140 according to Embodiment 1 as illustrated in FIG. 10. That is, the outer elastic part 240o may include a connection bar 241, which is provided with a head 242 and a fixed bar 243, and an elastic member 246o. The outer elastic portion 240o may be disposed on a lower block 233 of the upper punch 231 having an inverted T-shaped cross-section.

As illustrated in FIG. 10, an inner elastic part 240i may be disposed in an area of the lower block 233, which corresponds to an upper block 232. The inner elastic part 240i may include a connection bar 241' and an elastic member 246i. The connection bar 241' may include a head 242' disposed inside a through-groove 235' formed in the upper punch body 234. Here, the through groove 235' may be a groove formed to pass through the upper punch body 234 from one point P' between a top surface 234U and a bottom surface 234L of the upper punch body 234 to the bottom surface 234L of the upper punch body 234. The connection bar 241' may include a fixed bar 243' that is formed with a diameter less than that of the head 242' and extends downward from the head 242' so as to be fixed to the lower punch 236 at a lower end thereof. An upper end of the elastic member 246i may be inserted into the through-groove 235' to be disposed below the head 242'.

In the upper punch 231, an area on which the upper block 232 and the lower block 233 overlap each other may be thicker than the lower block 233, and a top surface of the upper block 232 may be in contact with a bottom surface of the upper die 120. Thus, the inner elastic part 240i may preferably have a shape accommodated in the through-groove 235' of the upper punch body 234.

The inner elastic part 240i may include a fixing member 247 inserted into and fixed to the through-groove 235' of the upper punch body 234. The fixing member 247 may include a body portion 247a inserted into the through-groove 235' and having an inverted U-shaped cross-section and an extension portion 247b horizontally extending outward from a lower end of the body portion 247a so as to be in close contact with the bottom surface 234L of the upper punch body 234.

The connection bar 241' and the elastic member 246i may be inserted into an inner space of the body portion 247a inserted into the through-groove 235'. A stopper 247c horizontally protruding inward may be formed in the inner space of the body portion 247a. The stopper 247c may prevent the head 242' of the connection bar 241' from being separated downward. The stopper 247c may be spaced a predetermined distance downward from a ceiling surface of the inner space of the body portion 247a so as to allow vertical movement of the connection bar 241'. An upper end of the elastic member 246i may be disposed below the stopper 247c.

When the fixing member 247 is provided, the connection bar 241' and the elastic member 246i may be installed on the fixing member 247 in the state of being installed in the through-groove 235' of the upper punch body 234, and thus, the installation of the inner elastic part 240i may be facilitated.

## Claims

1. An apparatus (100; 200) for manufacturing a pouch, the apparatus (100) comprising:
a lower die (110) provided with a forming groove (111) for forming a cup part (11) in a pouch film (F);
an upper die (120) disposed to be spaced upward from the lower die (110); and
a punch (130; 230) supported by the upper die (120) and configured to move toward the forming groove (111) so as to press the pouch film (F) to be disposed on the lower die (110),
wherein the punch (130; 230) comprises:
an upper punch (131; 231) vertically movably connected to the upper die (120);
a lower punch (136; 236) disposed to be spaced downward from the upper punch (131; 231) and configured to move together with the upper punch (131; 231) to press the pouch film (F);
an elastic part (140; 240) disposed between the upper punch (131; 231) and the lower punch (136; 236) to elastically support the lower punch (136; 236);
**characterized in that**
the elastic part (140; 240) comprises:
a connection bar (141; 241; 241') fixed to any one of the upper punch (131; 231) and the lower punch (136; 236) and connected to the other one of the upper punch (131; 231) and the lower punch (136; 236) so as to be movable in a vertical direction with respect to the other one; and
an elastic member (146; 246o; 246i) provided to surround the connection bar (141; 241; 241') between the upper punch (131; 231) and the lower punch (136; 236).

2. The apparatus (100; 200) of claim 1, wherein the elastic part (140; 240) is provided to elastically press the lower punch (136; 236) downward.

3. The apparatus (100; 200) of claim 1, wherein the upper punch (131; 231) comprises:
an upper punch body (134; 234) configured to define an outer appearance of the upper punch (131);
a first through-hole (135a) configured to pass through the upper punch body (134) from a top surface of the upper punch body (134) to one point between the top surface and a bottom surface of the upper punch body (134; 234); and
a second through-hole (135b) having an inner diameter greater than that of the first through-hole (135a) and configured to pass through the upper punch body (134) from the one point to the bottom surface of the upper punch body (134; 234), wherein the second through-hole (135b) communicates with the first through-hole (135a).

4. The apparatus (100; 200) of claim 3, wherein the connection bar (141; 241) comprises:
a head (142; 242) disposed outside the top surface of the upper punch body (134; 234); and
a fixed bar (143; 243) extending downward from the head (142; 242) to pass through the first and second through-holes (135a, 135b) so as to be fixed to the lower punch (136; 236) at a lower end thereof.

5. The apparatus (100; 200) of claim 4, wherein the head (142; 242) has a diameter greater than that of the first through-hole (135a) so as not to be inserted into the first through-hole (135a) or has a diameter greater than that of a central hole of a washer (W) disposed between the head (142; 242) and the top surface of the upper punch body (134; 234).

6. The apparatus (100; 200) of claim 3, wherein an upper end of the elastic member (146; 246o) is inserted into the second through-hole (135b) so as to be seated on a jaw (135c) provided by a difference in inner diameter between the first through-hole (135a) and the second through-hole (135b).

7. The apparatus (200) of claim 1, wherein the upper punch (231) comprises:
an upper punch body (234) configured to define an outer appearance of the upper punch (231); and
a through-groove (235') configured to pass through the upper punch body (234) from one point between a top surface and a bottom surface of the upper punch body (234) to the bottom surface of the upper punch body (234), and
the connection bar (241') comprises:
a head (242') disposed inside the through-groove (235'); and
a fixed bar (243') having a diameter less than that of the head (242') and extending downward from the head (242')so as to be fixed to the lower punch (236) at a lower end thereof,
wherein an upper end of the elastic member (240i) is inserted into the through-groove (235') so as to be disposed below the head (242').

8. The apparatus (200) of claim 7, wherein the elastic part (240) comprises:
a body portion (247) inserted into the through-groove (235') of the upper punch (231) and having an inverted U-shaped cross-section; and
an extension portion (247b) horizontally extending outward from a lower end of the body portion (247a) so as to be in close contact with the bottom surface of the upper punch body (234),
wherein the connection bar (241') and the elastic member (240) are inserted into an inner space of the body portion (234) inserted into the through-groove (235').

9. The apparatus (200) of claim 1, wherein the elastic part (240) comprises:
an outer elastic member (246o) disposed adjacent to an outer edge of the lower punch (236); and
an inner elastic member (246i) disposed closer to a center of the lower punch (236) than the outer elastic member (246o).

10. The apparatus (200) of claim 9, wherein the outer elastic member (246o) has an elastic modulus less than that of the inner elastic member (246i).

11. The apparatus (100; 200) of claim 1, wherein the lower die (136; 236) comprises:
a lower die body (112) which is configured to define an outer appearance of the lower die (136) and in which the forming groove (111) is defined; and
a nest (113) disposed to be vertically movable inside the forming groove (111) and provided to support the punch (130; 230) moving into the forming groove (111).

12. The apparatus (100; 200) of claim 11, wherein the punch (130; 230) is configured to move downward until the pouch film (F) is in close contact with a top surface of the nest (113) .

## Patentansprüche

1. Apparatur (100; 200) zur Herstellung eines Beutels, wobei die Apparatur (100) umfasst:
eine untere Matrize (110), welche mit einer Formungsnut (111) zum Formen eines Schalenteils (11) in einen Beutelstreifen (F) bereitgestellt ist;
eine obere Matrize (120), welche angeordnet ist, um nach oben von der unteren Matrize (110) beabstandet zu sein; und
einen Stempel (130, 230), welcher durch die obere Matrize (120) gehaltert ist und dazu eingerichtet ist, sich in Richtung der Formungsnut (111) zu bewegen, um den Beutelstreifen (F) zu pressen, um an der unteren Matrize (110) angeordnet zu sein,
wobei der Stempel (130; 230) umfasst:
einen oberen Stempel (131, 231), welcher vertikal beweglich mit der oberen Matrize (120) verbunden ist;
einen unteren Stempel (136; 236), welcher angeordnet ist, um nach unten von dem oberen Stempel (131, 231) beabstandet zu sein, und dazu eingerichtet ist, sich zusammen mit dem oberen Stempel (131, 231) zu bewegen, um den Beutelstreifen (F) zu pressen;
einen elastischen Teil (140; 240), welcher zwischen dem oberen Stempel (131, 231) und dem unteren Stempel (136, 236) angeordnet ist, um den unteren Stempel (136, 236) elastisch zu haltern;
**dadurch gekennzeichnet, dass** der elastische Teil (140; 240) umfasst:
eine Verbindungsstange (141; 241; 241'), welche an einem aus dem oberen Stempel (131, 231) und dem unteren Stempel (136, 236) befestigt ist und mit dem anderen aus dem oberen Stempel (131, 231) und dem unteren Stempel (136, 236) verbunden ist, um in einer vertikalen Richtung in Bezug auf den anderen beweglich zu sein; und
ein elastisches Element (146; 246o; 246i), welches bereitgestellt ist, um die Verbindungsstange (141; 241; 241') zwischen dem oberen Stempel (131; 231) und dem unteren Stempel (136; 236) zu umgeben.

2. Apparatur (100; 200) nach Anspruch 1, wobei der elastische Teil (140; 240) bereitgestellt ist, um den unteren Stempel (136: 236) elastisch nach unten zu pressen.

3. Apparatur (100; 200) nach Anspruch 1, wobei der obere Stempel (131; 231) umfasst:
einen oberen Stempelkörper (134; 234), welcher dazu eingerichtet ist, eine äußere Erscheinung des oberen Stempels (131) zu definieren;
ein erstes Durchgangsloch (135a), welches dazu eingerichtet ist, den oberen Stempelkörper (134) von einer oberen Fläche des oberen Stempelkörpers (134) zu einem Punkt zwischen der oberen Fläche und einer unteren Fläche des oberen Stempelkörpers (134; 234) zu durchtreten; und
ein zweites Durchgangsloch (135b), welches einen inneren Durchmesser aufweist, welcher größer als der des ersten Durchgangslochs (135a) ist, und dazu eingerichtet ist, den oberen Stempelkörper (134) von dem einen Punkt zu der unteren Fläche des oberen Stempelkörpers (134; 234) zu durchtreten; wobei das zweite Durchgangsloch (135b) mit dem ersten Durchgangsloch (135a) kommuniziert.

4. Apparatur (100; 200) nach Anspruch 3, wobei die Verbindungsstange (141; 241) umfasst:
einen Kopf (142; 242), welcher außerhalb der oberen Fläche des oberen Stempelkörpers (134: 234) angeordnet ist; und
eine befestigte Stange (143; 243), welche sich von dem Kopf (142; 242) nach unten erstreckt, um die ersten und zweiten Durchgangslöcher (135a; 135b) zu durchtreten, um an dem unteren Stempel (136; 236) an einem unteren Ende davon befestigt zu sein.

5. Apparatur (100; 200) nach Anspruch 4, wobei der Kopf (142; 242) einen Durchmesser aufweist, welcher größer als der des ersten Durchgangslochs (135a) ist, um nicht in das erste Durchgangsloch (135a) eingeführt zu sein, oder einen Durchmesser aufweist, welcher größer als der eines zentralen Lochs einer Unterlegscheibe (W) ist, welche zwischen dem Kopf (142; 242) und der oberen Fläche des oberen Stempelkörpers (134; 234) angeordnet ist.

6. Apparatur (100; 200) nach Anspruch 3, wobei ein oberes Ende des elastischen Elements (146; 246o) in das zweite Durchgangsloch (135b) eingeführt ist, um an einer Backe (135c) anzuliegen, welche durch eine Differenz in einem inneren Durchmesser zwischen dem ersten Durchgangsloch (135a) und dem zweiten Durchgangsloch (135b) bereitgestellt ist.

7. Apparatur (200) nach Anspruch 1, wobei der obere Stempel (231) umfasst:
einen oberen Stempelkörper (234), welcher dazu eingerichtet ist, eine äußere Erscheinung des oberen Stempels (231) zu definieren; und
eine Durchgangsnut (235'), welche dazu eingerichtet ist, den oberen Stempelkörper (234) von einem Punkt zwischen einer oberen Fläche und einer unteren Fläche des oberen Stempelkörpers (234) zu der unteren Fläche des oberen Stempelkörpers (234) zu durchtreten, und
die Verbindungsstange (241') umfasst:
einen Kopf (242'), welcher in der Durchgangsnut (235') angeordnet ist; und
eine befestigte Stange (243'), welche einen Durchmesser aufweist, welcher geringer als der des Kopfs (242') ist und sich von dem Kopf (242') nach unten erstreckt, um an dem unteren Stempel (236) an einem unteren Ende davon befestigt zu sein,
wobei ein oberes Ende des elastischen Elements (240i) in die Durchgangsnut (235') eingeführt ist, um unterhalb des Kopfs (242') angeordnet zu sein.

8. Apparatur (200) nach Anspruch 7, wobei der elastische Teil (240) umfasst:
einen Körperabschnitt (247), welcher in die Durchgangsnut (235') des oberen Stempels (231) eingeführt ist und einen invertierten U-förmigen Querschnitt aufweist; und
einen Verlängerungsabschnitt (247b), welcher sich horizontal nach außen von einem unteren Ende des Körperabschnitts (247a) erstreckt, um in nahem Kontakt mit der unteren Fläche des oberen Stempelkörpers (234) zu sein,
wobei die Verbindungsstange (241') und das elastische Element (240) in einem inneren Raum des Körperabschnitts (234) eingeführt sind, welcher in die Durchgangsnut (235') eingeführt ist.

9. Apparatur (200) nach Anspruch 1, wobei der elastische Teil (240) umfasst:
ein äußeres elastisches Element (246o), welches benachbart zu einem äußeren Rand des unteren Stempels (236) angeordnet ist; und
ein inneres elastisches Element (246i), welches näher an einem Zentrum des unteren Stempels (236) als das äußere elastische Element (246o) angeordnet ist.

10. Apparatur (200) nach Anspruch 9, wobei das äußere elastische Element (246o) einen geringeren Elastizitätsmodul als der des inneren elastischen Elements (246i) aufweist.

11. Apparatur (100; 200) nach Anspruch 1, wobei die untere Matrize (136; 236) umfasst:
einen unteren Matrizenkörper (112), welcher dazu eingerichtet ist, eine äußere Erscheinung der unteren Matrize (136) zu definieren, und in welchem die Formungsnut (111) definiert ist; und
ein Nest (113), welches angeordnet ist, um in der Formungsnut (111) vertikal beweglich zu sein, und bereitgestellt ist, um den Stempel (130; 230), welcher sich in die Formungsnut (111) bewegt, zu haltern.

12. Apparatur (100; 200) nach Anspruch 11, wobei der Stempel (130; 230) dazu eingerichtet ist, sich nach unten zu bewegen bis der Beutelstreifen (F) in nahem Kontakt zu einer oberen Fläche des Nests (113) ist.

## Revendications

1. Appareil (100 ; 200) pour la fabrication d'une poche, l'appareil (100) comprenant :
une matrice inférieure (110) munie d'une rainure de formation (111) pour former une partie de coupelle (11) dans un film de poche (F) ;
une matrice supérieure (120) disposée pour être espacée vers le haut de la matrice inférieure (110) ; et
un poinçon (130 ; 230) supporté par la matrice supérieure (120) et configuré pour se déplacer vers la rainure de formation (111) de manière à presser le film de poche (F) à disposer sur la matrice inférieure (110),
dans lequel le poinçon (130 ; 230) comprend :
un poinçon supérieur (131 ; 231) mobile verticalement relié à la matrice supérieure (120) ;
un poinçon inférieur (136 ; 236) disposé pour être espacé vers le bas du poinçon supérieur (131 ; 231) et configuré pour se déplacer avec le poinçon supérieur (131 ; 231) pour presser le film de poche (F) ;
une partie élastique (140 ; 240) disposée entre le poinçon supérieur (131 ; 231) et le poinçon inférieur (136 ; 236) pour soutenir élastiquement le poinçon inférieur (136 ; 236) ;
**caractérisé en ce que**
la partie élastique (140 ; 240) comprend :
une barre de liaison (141 ; 241 ; 241') fixée à l'un quelconque du poinçon supérieur (131 ; 231) et du poinçon inférieur (136 ; 236) et reliée à l'autre du poinçon supérieur (131 ; 231) et du poinçon inférieur (136 ; 236) de manière à être mobile dans une direction verticale par rapport à l'autre ; et
un organe élastique (146 ; 246o ; 246i) prévu pour entourer la barre de liaison (141 ; 241 ; 241') entre le poinçon supérieur (131 ; 231) et le poinçon inférieur (136 ; 236).

2. Appareil (100 ; 200) selon la revendication 1, dans lequel la partie élastique (140 ; 240) est prévue pour pousser élastiquement le poinçon inférieur (136 ; 236) vers le bas.

3. Appareil (100 ; 200) selon la revendication 1, dans lequel le poinçon supérieur (131 ; 231) comprend :
un corps de poinçon supérieur (134 ; 234) configuré pour définir un aspect extérieur du poinçon supérieur (131) ;
un premier trou traversant (135a) configuré pour traverser le corps de poinçon supérieur (134) à partir d'une surface supérieure du corps de poinçon supérieur (134) vers un point entre la surface supérieure et une surface inférieure du corps de poinçon supérieur (134 ; 234) ; et
un deuxième trou traversant (135b) ayant un diamètre intérieur supérieur à celui du premier trou traversant (135a) et configuré pour passer à travers le corps de poinçon supérieur (134) à partir du un point vers la surface inférieure du corps de poinçon supérieur (134 ; 234), dans lequel le deuxième trou traversant (135b) communique avec le premier trou traversant (135a).

4. Appareil (100 ; 200) selon la revendication 3, dans lequel la barre de liaison (141 ; 241) comprend :
une tête (142 ; 242) disposée en dehors de la surface supérieure du corps de poinçon supérieur (134 ; 234) ; et
une barre fixe (143 ; 243) s'étendant vers le bas à partir de la tête (142 ; 242) pour traverser les premier et deuxième trous traversants (135a, 135b) de manière à être fixée au poinçon inférieur (136 ; 236) à une extrémité inférieure de celle-ci.

5. Appareil (100 ; 200) selon la revendication 4, dans lequel la tête (142 ; 242) a un diamètre supérieur à celui du premier trou traversant (135a) de manière à ne pas être inséré dans le premier trou traversant (135a) ou a un diamètre supérieur à celui d'un trou central d'une rondelle (W) disposée entre la tête (142 ; 242) et la surface supérieure du corps de poinçon supérieur (134 ; 234).

6. Appareil (100 ; 200) selon la revendication 3, dans lequel une extrémité supérieure de l'organe élastique (146; 246o) est insérée dans le deuxième trou traversant (135b) de manière à être placée sur une mâchoire (135c) fournie par une différence de diamètre intérieur entre le premier trou traversant (135a) et le deuxième trou traversant (135b).

7. Appareil (200) selon la revendication 1, dans lequel le poinçon supérieur (231) comprend :
un corps de poinçon supérieur (234) configuré pour définir un aspect extérieur du poinçon supérieur (231) ; et
une rainure traversante (235') configurée pour passer à travers le corps de poinçon supérieur (234) à partir d'un point entre une surface supérieure et une surface inférieure du corps de poinçon supérieur (234) vers la surface inférieure du corps de poinçon supérieur (234), et
la barre de liaison (241') comprend :
une tête (242') disposée à l'intérieur de la rainure traversante (235') ; et
une barre fixe (243') ayant un diamètre inférieur à celui de la tête (242') et s'étendant vers le bas à partir de la tête (242') de manière à être fixée au poinçon inférieur (236) à une extrémité inférieure de celle-ci,
dans lequel une extrémité supérieure de l'organe élastique (240i) est insérée dans la rainure traversante (235') de manière à être disposée sous la tête (242').

8. Appareil (200) selon la revendication 7, dans lequel la partie élastique (240) comprend :
une portion de corps (247) insérée dans la rainure traversante (235') du poinçon supérieur (231) et ayant une section transversale inversée en forme de U ; et
une portion d'extension (247b) s'étendant horizontalement vers l'extérieur à partir d'une extrémité inférieure de la portion de corps (247a) de manière à être en contact étroit avec la surface inférieure du corps de poinçon supérieur (234),
dans lequel la barre de liaison (241') et l'organe élastique (240) sont insérés dans un espace intérieur de la portion de corps (234) insérée dans la rainure traversante (235').

9. Appareil (200) selon la revendication 1, dans lequel la partie élastique (240) comprend :
un organe élastique extérieur (246o) disposé adjacent à un bord extérieur du poinçon inférieur (236) ; et
un organe élastique intérieur (246i) disposé plus près d'un centre du poinçon inférieur (236) que l'organe élastique extérieur (246o).

10. Appareil (200) selon la revendication 9, dans lequel l'organe élastique extérieur (246o) présente un module élastique inférieur à celui de l'organe élastique intérieur (246i).

11. Appareil (100 ; 200) selon la revendication 1, dans lequel la matrice inférieure (136 ; 236) comprend :
un corps de matrice inférieure (112) qui est configuré pour définir un aspect extérieur de la matrice inférieure (136) et dans lequel la rainure de formation (111) est définie ; et
un nid (113) disposé pour être mobile verticalement à l'intérieur de la rainure de formation (111) et prévu pour soutenir le poinçon (130 ; 230) se déplaçant dans la rainure de formation (111).

12. Appareil (100 ; 200) selon la revendication 11, dans lequel le poinçon (130 ; 230) est configuré pour se déplacer vers le bas jusqu'à ce que le film de poche (F) soit en contact étroit avec une surface supérieure du nid (113).
